# EUROPÄISCHE PATENTSCHRIFT

(11) **EP 2 283 215 B1**
(45) Veröffentlichungstag und Bekanntmachung des Hinweises auf die Patenterteilung: **27.03.2013**
(21) Anmeldenummer: 09741985.7
(22) Anmeldetag: 23.04.2009
(51) Int. Cl.: F01N 3/28, B01J 35/04, B23K 1/00

(54) **WABENKÖRPER MIT RADIAL VERSCHIEDEN AUSGEFÜHRTEN VERBINDUNGSSTELLEN**
HONEYCOMB BODY HAVING RADIALLY DIFFERENTLY CONFIGURED CONNECTING POINTS
CORPS EN NID D'ABEILLES AVEC DES POINTS DE LIAISON DISTINCTS

(30) Priorität: 07.05.2008 DE 102008022518
(43) Veröffentlichungstag der Anmeldung: 16.02.2011
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); HIRTH, Peter, 51503 Rösrath (DE); BRÜCK, Rolf, 51429 Bergisch Gladbach (DE)
(74) Vertreter: Rössler, Matthias
(86) Internationale Anmeldenummer: PCT/EP2009/054904
(87) Internationale Veröffentlichungsnummer: WO 2009/135767

(56) Entgegenhaltungen:
- EP-A- 0 590 171
- DE-A1- 19 900 148
- US-A- 5 403 558

## Beschreibung

Die vorliegende Erfindung betrifft einen Wabenkörper, der zumindest ein Gehäuse und eine Wabenstruktur mit einer Vielzahl von Kanälen aufweist. Die Wabenstruktur ist dabei mit zumindest einer wenigstens teilweise strukturierten metallischen Lage gebildet, wobei diese mit sich selbst und/oder benachbarten Lagen Verbindungsstellen bildet, die die Wabenstruktur fixieren. Solche Wabenkörper werden beispielsweise als Katalysator-Trägerkörper für Abgasreinigungseinheiten in mobilen Abgasanlagen eingesetzt.

Wabenkörper bei der Abgasreinigung von Verbrennungskraftmaschinen, wie beispielsweise Diesel- oder Otto-Motoren, haben den Vorteil einer besonders großen Oberfläche, so dass ein sehr inniger Kontakt des ihn durchströmenden Abgases an den Kanalwänden gewährleistet ist. Diese Oberfläche, die grundsätzlich von den Kanalwänden gebildet ist, wird regelmäßig mit geeigneten, gegebenenfalls verschiedenen, Katalysatoren beschichtet, um eine Konvertierung von im Abgas enthaltenen Schadstoffen zu ermöglichen.

Solche Wabenkörper können grundsätzlich aus keramischem oder metallischem Material gefertigt sein. In der letzten Zeit hat sich jedoch der metallische Katalysator-Trägerkörper besonders hervorgetan, weil hier mit sehr dünnen Materialien, z. B. Blechfolien mit einer Dicke < 80 µm oder sogar < 50 µm, gearbeitet werden kann. Damit einher gehen eine sehr große geometrische Oberfläche und ein signifikant kleinerer Druckverlust des Abgasstroms beim Durchströmen des Wabenkörpers im Vergleich zu keramischen Trägerstrukturen. Als weiterer Vorteil kann angesehen werden, dass hier gleichermaßen eine sehr einfache Anbindung an das übrige Abgassystem (z. B. ein Abgasrohr) ermöglicht ist, wobei jeweils metallische Materialien miteinander kombiniert werden.

Eine solche Wabenstruktur ist jedoch in ihrem Lebenszyklus in einem mobilen Abgassystem einer Vielzahl unterschiedlicher Belastungen unterworfen. Dabei ist auch zu berücksichtigen, dass gerade die Superposition dieser teilweise extremen Belastungen nachhaltig die Dauerhaltbarkeit solcher Wabenkörper beeinflusst. So kann thermische Belastung ein wesentlicher Faktor sein, wie beispielsweise die extremen Temperaturspitzen (bis oberhalb von 1000 °C), die beachtliche Temperaturänderungsgeschwindigkeit beim Aufheizen und Abkühlen, sowie die Temperaturverteilung des anströmenden Abgasstromes. Gleichermaßen gilt dies auch im Hinblick auf die mechanische Belastung, nämlich beispielsweise bezüglich des maximalen Beschleunigungspegels, des Frequenzbereichs der Anregung hinsichtlich der Eigenfrequenzen sowie auch die gasdynamische Belastung durch Gaspulsation. Dies lässt erkennen, dass gerade die Verbindungsbereiche der einzelnen Komponenten (Blechfolien, Gehäuse, ...) eines solches Wabenkörpers miteinander besonders hohen Belastungen ausgesetzt sind und den sich ständig ändernden thermischen und/oder dynamischen Belastungen nach Möglichkeit sehr lange entsprechen sollen.

Es sind Verbindungstechniken bekannt, bei denen Hart-Lot (als Lotfolie, Lotpulver und/oder Lotpaste) in bestimmten Zonen eines solchen Wabenkörpers positioniert wird, um die metallischen Komponenten miteinander zu verbinden. Zwischen dem Gehäuse und den Blechfolien des Wabenkörpers werden regelmäßig streifenartige, umlaufende Zonen gebildet, wobei diese sich über einen Teil oder die gesamte Länge des Wabenkörpers bzw. des Gehäuses erstrecken können. Zur Verbindung der Blechfolien miteinander kann ebenfalls als bekannt angesehen werden, dass diese über den gesamten Querschnitt in einem axialen Teilbereich des Wabenkörpers miteinander verbunden sind. Zusätzlich und/oder alternativ dazu ist auch möglich, (stirnseitig gesehen) Zonen zu bilden, die eine Vielzahl von Kanälen umfassen, in denen eine flächige Verbindung ausgeführt ist. So lassen sich stirnseitige Muster, beispielsweise nach Art von konzentrischen Ringen, Streifen, Dreiecken oder anderen flächigen Gebilden erzeugen.

Die DE-A1-199 00 148 offenbart einen spiralförmig gewickelten Metallträger für Abgasreinigungskatalysatoren aus einem flachen und einem gewellten Metallblech, wobei beide Metallbleche nach jeder Umdrehung an Schweißstellen miteinander verbunden werden. Die Schweißstellen bilden im Wesentlichen punktförmige Verbindungsstellen aus.

Die EP-A1 0 590 171 offenbart eine Wabenstruktur aus gewellten und glatten Metallblechen, wobei diese teilweise miteinander verlötet oder verschweißt sind. Zur Kompensation von thermischen Spannungen wird dort vorgeschlagen, zwei glatte Metallbleche benachbart zueinander anzuordnen und diese nicht miteinander zu verbinden.

Die US 5,403,558 betrifft ebenfalls einen Metallträger aus einem gewellten und einem glatten Metallblech. Die Metallbleche sind spiralförmig so gewickelt, dass eine Vielzahl von übereinander angeordneten Wicklungen gebildet ist. Die aneinander liegenden Metallbleche sind teilweise miteinander verbunden, wobei die äußeren Wicklungen alle miteinander verbunden sind und in einem zentralen Bereich weniger oder keine stoffschlüssigen Verbindungen vorgesehen sind.

Auch wenn es zum Design eines solchen Lötbildes bereits eine Vielzahl unterschiedlicher Vorschläge gegeben hat, so können diese jedoch im Hinblick auf die Dauerhaltbarkeit nicht allen derzeit herrschenden Bedingungen im Abgassystem eines Kraftfahrzeuges standhalten. Bei der Festlegung eines Designs für die Lötverbindung eines solchen Wabenkörpers kann eine Vielzahl von unterschiedlichen Kriterien betrachtet werden, um ausreichende Flexibilität auf der einen Seite und Dauerhaltbarkeit der Wabenstruktur auf der anderen Seite zu verwirklichen. Darüber hinaus ist bei der Herstellung eines solchen Lötbildes auch zu berücksichtigen, dass die Lötverbindungen reproduzierbar, exakt positionierbar und prozesssicher realisiert werden müssen.

Hiervon ausgehend ist es Aufgabe der vorliegenden Erfindung, die mit Bezug auf den Stand der Technik geschilderten Probleme zumindest teilweise zu lösen. Insbesondere soll ein Wabenkörper angegeben werden, der bei den extremen thermischen und dynamischen Beanspruchungen in Abgassystemen eines Automobils eine deutlich verbesserte Lebensdauer hat. Dabei sollen insbesondere die Verbindungsstellen so zueinander angeordnet sein, dass gezielt flexible Bereiche im Inneren des Wabenkörpers realisiert sind, so dass z. B. das radiale Expansionsverhalten der Wabenstruktur gezielt einstellbar ist. Somit soll er Wabenkörper beispielsweise auch ein deutlich verbessertes Thermoschock-Verhalten und/oder ein verbessertes Schwingungsverhalten aufweisen.

Diese Aufgaben werden mit einem Wabenkörper gemäß den Merkmalen des Patentanspruchs 1 gelöst. Weitere vorteilhafte Ausgestaltungen des Wabenkörpers sind in abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfmdung aufzeigen. Die Beschreibung, insbesondere im Zusammenhang mit den Figuren, erläutert die Erfindung weiter und gibt zusätzliche besonders bevorzugte Ausführungsvarianten der Erfindung an.

Der Wabenkörper weist zumindest ein Gehäuse und eine Wabenstruktur mit einer Vielzahl von Kanälen auf, wobei die Wabenstruktur mit zumindest einer wenigstens teilweise strukturierten metallischen Lage gebildet ist, die die Wabenstruktur fixierende Verbindungsstellen bildet, und ein Querschnitt der Wabenstruktur radiale Zonen mit Verbindungsstellen aufweist, wobei
- in wenigstens einer Zone zudem mindestens 1% und höchstens 20% innerer Kontaktpunkte der zumindest einen wenigstens teilweise strukturierten metallischen Lage in dem Querschnitt eine Verbindungsstelle bilden, und
- die Verbindungsstellen eine Länge in Richtung einer Struktur der metallischen Lage aufweisen, wobei die Länge der Verbindungsstellen in wenigstens zwei radialen Zonen voneinander verschieden ist.

Im Hinblick auf die Anzahl der Kanäle ist bevorzugt, dass der Wabenkörper mit einer Kanaldichte pro Quadratinch (cpsi) im Bereich von 100 bis 1000, insbesondere von 200 bis 600, ausgeführt ist. Bevorzugt ist weiter, dass mehrere glatte und mehrere strukturierte (z. B. gewellte) metallische Lagen (z. B. nach Art von Blechfolien) zur Herstellung des Wabenkörpers eingesetzt werden. Auch wenn solche metallischen Lagen beispielsweise spiralförmig aufgewickelt werden können, so ist es jedoch bevorzugt, dass die metallische Lage einen hiervon abweichenden Verlauf aufweist, beispielsweise S-förmig, V-förmig, W-förmig, U-förmig oder dergleichen. Die Anordnung solcher metallischen Lagen zueinander erfolgt dann so, dass diese letztendlich gleichmäßig den (runden, ovalen oder ähnlichen) Querschnitt des Wabenkörpers ausfüllen. Diese metallischen Lagen sind nun an diversen Positionen miteinander (kraftschlüssig) verbunden, so genannte Verbindungsstellen. Hierbei handelt es sich bevorzugt um eine Lötverbindung, insbesondere um eine Hochtemperatur-Vakuum-Lötverbindung. Mit diesen Verbindungsstellen wird also die Relativlage der metallischen Lagen zueinander so definiert, dass die Wabenstruktur im Gehäuse im Wesentlichen fixiert ist.

Der Wabenkörper lässt sich nun in mehrere radiale Zonen unterteilen, wobei wenigstens in einer Zone nur in sehr begrenztem Umfang Verbindungsstellen ausgebildet sind. So ist in dieser radialen Zone (z. B. nach Art eines Kreisrings) eine Vielzahl innerer Kontaktpunkte der mindestens einen metallischen Lage gebildet. Zumeist werden diese Kontaktpunkte dadurch gebildet, dass ein Abschnitt einer strukturierten metallischen Lage an einem anderen Abschnitt einer benachbarten metallischen Lage (glatten und/oder strukturierten) anliegt. Diese Kontaktpunkte sind also regelmäßig in Richtung einer Struktur verlaufende Kontaktlinien der benachbarten Abschnitte von metallischen Lagen. In dieser wenigstens einen Zone werden nun also höchstens 20% dieser Kontaktpunkte zur Ausbildung der die Wabenstruktur fixierenden Verbindungsstellen genutzt, bei den übrigen Kontaktpunkten ist (zumindest in dem betrachteten Querschnitt) keine Verbindungsstelle ausgebildet. Bevorzugt liegt der Anteil der Verbindungsstellen unter 10% oder sogar 5% der Kontaktpunkte.

Darüber hinaus wird hier vorgeschlagen, dass diese Verbindungsstellen sich entlang einer Struktur, nämlich entlang der inneren Kontaktpunkte, erstrecken und zwar mit einer Länge, die in wenigstens zwei radialen Zonen verschieden ausgeführt ist. Bevorzugt ist dabei, dass die Länge der Verbindungsstellen stets kürzer als die Kontaktlinie insgesamt ist. Dabei ist klar, dass hier stets ein Zustand betrachtet wird, wenn die Wabenstruktur in das Gehäuse eingesetzt ist, und zwar bei Raumtemperatur. Die Zonen sind dabei bevorzugt so gewählt, dass sie mehrere metallische Lagen kreuzen, beispielsweise sich über mindestens fünf metallische Lagen hinweg erstrecken. Die verschiedene Ausgestaltung der Länge der Verbindungsstellen kann nun sprunghaft verschieden sein, also beispielsweise ist die Länge der Verbindungsstellen in einer ersten radialen Zone um ein Vielfaches größer/kleiner als in einer weiteren radialen Zone. Es ist aber auch möglich, dass ein kontinuierlicher Zuwachs und/oder eine kontinuierliche Abnahme der Länge der Verbindungsstellen in benachbarten Zonen realisiert ist.

Ganz besonders bevorzugt ist, dass die Länge der Verbindungsstellen in einer radialen Zone kleiner ist als in einer in Richtung eines Radius der Wabenstruktur weiter außen liegenden radialen Zone. Das heißt mit anderen Worten, dass die Länge der Verbindungsstellen nach außen zunimmt, also größer wird. Hierbei ist grundsätzlich auch möglich, dass dazwischen noch eine radiale Zone vorgesehen ist, bei der die Länge der Verbindungsstellen kleiner als in der inneren radialen Zone ausgebildet ist, letztendlich ist aber weiter außen noch eine radiale Zone mit einer größeren Länge der Verbindungsstellen realisiert.

Darüber hinaus wird vorgeschlagen, dass die Länge der Verbindungsstellen in einem Zentrum der Wabenstruktur am kleinsten und in einer äußeren radialen Zone am größten ist. Ein solcher Wabenkörper ist insbesondere im Hinblick auf die thermischen Wechselbeanspruchungen ausgelegt. Eine konträre Ausgestaltung wäre dann z. B. vorteilhaft, wenn das Schwingungsverhalten im Vordergrund stehen würde.

Gemäß einer Weiterbildung wird vorgeschlagen, dass die Verbindungsstellen in wenigstens einer radialen Zone mit einer gegenüber den Verbindungsstellen beider benachbarten Zonen verringerten Länge ausgeführt sind. Das betrifft insbesondere den Fall, dass drei oder mehr radiale Zonen gebildet sind, wobei bevorzugt die benachbart zur äußersten radialen Zone angeordnete radiale Zone mit der verringerten Länge ausgeführt ist. Damit ist ein flexibler Bereich herstellbar, in dem insbesondere axial unterschiedliches thermisches Ausdehnungsverhalten aufgrund unterschiedlicher thermischer Beanspruchungen kompensiert werden kann. Auch kann so die Wärmeleitung in radialer Richtung gegebenenfalls reduziert werden. Gleichermaßen erlaubt die Bereitstellung einer großen Länge der Verbindungsstellen in der äußersten Zone eine sichere Anbindung beispielsweise an das Gehäuse.

Darüber hinaus wird vorgeschlagen, dass die Verbindungsstellen jeweils einen Mittelpunkt aufweisen, wobei die Mittelpunkte der Verbindungsstellen einer radialen Zone gegenüber Mittelpunkten der Verbindungsstellen einer anderen radialen Zone in Richtung der Struktur versetzt sind. Regelmäßig verläuft die Struktur im Wesentlichen parallel zur Achse des Wabenkörpers, so dass hier gegebenenfalls auch die Länge der Verbindungsstellen bzw. die Position der Mittelpunkte mit Bezug auf diese Achse betrachtet werden kann. Das bedeutet nun mit anderen Worten auch, dass nicht nur die Länge der Verbindungsstellen in radialer Richtung unterschiedlich ist, sondern auch deren Lage mit Bezug auf die axiale Position in der Wabenstruktur. So sind die Mittelpunkte beispielsweise mehr in der Nähe der einen oder anderen Stirnseite der Wabenstruktur ausgebildet.

Ganz besonders bevorzugt ist es dabei, dass die Wabenstruktur eine zentrale Achse und Stirnseiten aufweist, wobei die Mittelpunkte der Verbindungsstellen einer radialen Zone nahe der Achse näher an einer Stirnseite angeordnet sind als die Mittelpunkte der Verbindungsstellen in wenigstens einer weiter von der Achse entfernten radialen Zone. Das heißt mit anderen Worten beispielsweise, dass die Verbindungsstellen nahe dem Zentrum angrenzend zu der einen und/oder anderen Stirnseite positioniert sind. Die, insbesondere länger ausgeführten, Verbindungsstellen radial außen sind dagegen mit ihren Mittelpunkten näher hin zur Mitte zwischen den beiden Stirnflächen positioniert.

Ganz besonders bevorzugt findet ein solcher Wabenkörper Einsatz in einer Abgasbehandlungseinheit, insbesondere in der eines Kraftfahrzeuges.

Besonders bevorzugte Ausführungsvarianten der Erfindung sowie das technische Umfeld werden nun anhand der Figuren näher erläutert. Es ist darauf hinzuweisen, dass die in den Figuren gezeigten Ausführungsbeispiele die Erfindung nicht beschränken sollen. Es zeigen schematisch:
- Fig. 1:: einen Querschnitt einer Ausführungsvariante des Wabenkörpers,
- Fig. 2:: ein Diagramm der Darstellung der unterschiedlichen Längen der Verbindungsstellen in Richtung des Radius,
- Fig. 3:: ein weiteres Diagramm mit weiteren Verlaufsdarstellungen für die Längen der Verbindungsstellen,
- Fig. 4:: einen Längsschnitt durch eine Ausgestaltung des erfindungsgemäßen Wabenkörpers,
- Fig. 5:: ein Diagramm zur Veranschaulichung der axialen Position der Verbindungsstellen,
- Fig. 6:: ein Kraftfahrzeug mit einem Abgassystem,
- Fig. 7:: eine weitere Ausführungsvariante des erfindungsgemäßen Wabenkörpers im Längsschnitt,
- Fig. 8:: ein erstes Detail eines Stapels für einen erfindungsgemäßen Wabenkörper, und
- Fig. 9:: ein weiteres Detail einer anderen Ausführungsvariante eines Stapels für einen Wabenkörper.

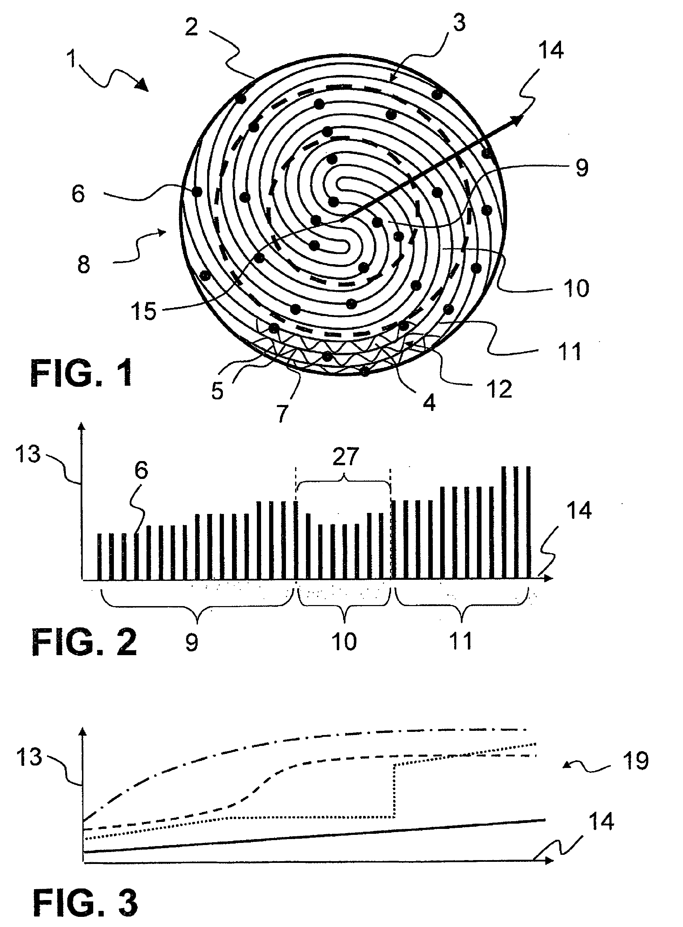

Fig. 1 zeigt in einer stirnseitigen Ansicht einen Querschnitt 8 eines Wabenkörpers 1. Der Wabenkörper 1 ist dabei mit einem runden Gehäuse 2 nach Art eines Metallrohres gebildet, in dem die Wabenstruktur 3 positioniert ist. Die Wabenstruktur 3 ist mit einer Mehrzahl glatter und gewellter metallischer Lagen 5 gebildet, die hier S-förmig angeordnet sind. Mit diesen metallischen Lagen 5 sind viele Kanäle 4 gebildet, die sich insbesondere aus der gewellten Struktur 12 der strukturierten metallischen Lage 5 ergeben. Die Kanäle 4, ebenso wie die Struktur 12, verlaufen dabei im Wesentlichen senkrecht zum Radius 14 des Wabenkörpers 1, hier also in die Zeichenebene hinein.

Der Querschnitt 8 kann nun beispielsweise ausgehend von seinem Zentrum 15 in mehrere Zonen unterteilt werden, nämlich beispielsweise in eine erste radiale Zone 9, eine zweite radiale Zone 10 und eine dritte radiale Zone 11. Die Zonen sind hier nach Art von Kreisen bzw. Kreisringen gebildet, eine hiervon abweichende Gestalt ist gleichermaßen möglich. Wie hier unten in einem Teil schematisch angedeutet, erfassen die Zonen in Richtung des Radius 14 mehrere metallische Lagen 5. Die metallischen Lagen 5 in einer Zone, wie hier beispielsweise für die dritte Zone 11 dargestellt, bilden eine Reihe von Kontaktpunkten 7 aus, die insbesondere linienförmig entlang der Extrema der Struktur 12 ausgebildet sind. Wie hier nun (rein schematisch) angedeutet ist, sind nur sehr wenige Verbindungsstellen 6 ausgebildet. Bei der veranschaulichten Variante in Fig. 1 ist in allen Zonen verwirklicht, dass mindestens 1% und höchstens 20% der Kontaktpunkte 7 der metallischen Lagen 5 miteinander eine Verbindungsstelle 6 bilden.

In Fig. 2 ist nunmehr ein Diagramm dargestellt, welches beispielhaft die Länge 13 der Verbindungsstellen 6 in den einzelnen Zonen darstellen soll. Die Abszisse veranschaulicht dabei den Radius 14, während die Ordinate die Länge 13 der Verbindungsstellen 6 veranschaulichen soll. Ausgehend vom Zentrum ist also links im Diagramm zunächst die Länge 13 der Verbindungsstellen 6 in der ersten Zone 9 dargestellt. Diese ist hier stufenförmig radial nach außen ansteigend ausgebildet. Daran anschließend ist die Länge 13 der Verbindungsstellen 6 in der zweiten Zone 10 dargestellt. Diese stellt hier einen flexiblen Bereich 27 dar, wobei die Länge 13 hier kleiner ausgeführt ist als direkt in Nachbarschaft innerhalb der ersten Zone 9. Ebenso ist die radial weiter außen liegende dritte Zone 11 wiederum mit einer größeren Länge 13 der Verbindungsstellen 6 ausgeführt. Innerhalb dieser dritten Zone 11 ist erneut ein stufenförmiger Anstieg der Länge 13 der Verbindungsstellen 6 zu erkennen, wobei hier auch die längsten Verbindungsstellen 6 über den gesamten Querschnitt vorgesehen sind. Nur der Vollständigkeit halber sei darauf hingewiesen, dass die Längenunterschiede hier nur schematisch veranschaulicht sind, die Unterschiede können auch deutlich größer oder gegebenenfalls kleiner ausgeführt sein.

Betrachtet man nunmehr den Verlauf der Spitzen der einzelnen Verbindungsstellen 6 in Fig. 2, ergibt sich eine imaginäre Decklinie, die als Längenverlauf über den Radius 14 angesehen werden kann. In Fig. 3 sind nunmehr eine Mehrzahl möglicher Längenverläufe 19 über den Radius 14 beispielhaft dargestellt. Ein erster Längenverlauf 19 ist mit einer voll durchgezogenen Linie veranschaulicht. Diese ist kontinuierlich, gleichbleibend ansteigend ausgebildet. Bei dieser Ausgestaltung des Längenverlaufs 19 können beliebig viele radiale Zonen gebildet werden, wobei gleichwohl die Bedingung der zueinander verschieden bzw. ansteigenden Längen der Verbindungsstellen realisiert ist. Darüber ist gepunktet ein weiterer Längenverlauf 19 dargestellt. Hierbei ist in einer ersten Zone beispielsweise ein Anstieg der Länge 13 festzustellen, in einer zweiten Zone eine gleichbleibende Länge, bevor ein sprunghafter Anstieg in einer dritten Zone mit weiter ansteigender Länge 13 realisiert ist. Darüber ist gestrichelt ein weiterer Längenverlauf 19 dargestellt, wobei über alle Zonen hinweg zwar ein Ansteigen der Länge erkennbar ist, dies jedoch in den unterschiedlichen Zonen mit verschiedener Zuwachsrate erfolgt. Schließlich ist ganz oben mit einer Strich-Punkt-Linie ein letzter Längenverlauf 19 veranschaulicht, der eine Art Sättigungskurve nachbildet.

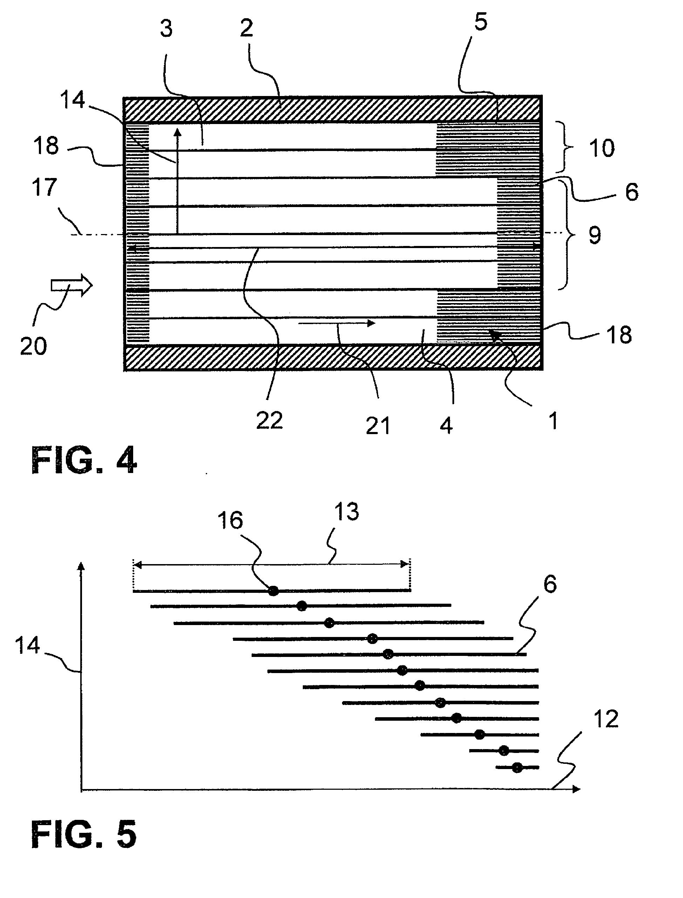

Fig. 4 zeigt schematisch einen Längsschnitt durch eine Ausgestaltung eines solchen Wabenkörpers 1. Der Wabenkörper 1 wird wiederum außen durch ein Gehäuse 2 begrenzt, in dem die Wabenstruktur 3 positioniert ist. Die Wabenstruktur 3 weist eine Vielzahl von Kanälen 4 auf, die sich zwischen den Stirnseiten 18 erstrecken. Hierbei wird durch die Stirnseiten 18 auch die Erstreckung 22 der Wabenstruktur 3 definiert. Bei der hier veranschaulichten Ausführungsvariante ist die Kanalerstreckungsrichtung 21 der Kanäle 4 parallel zur zentralen Achse 17 der Wabenstruktur 3. Senkrecht zu dieser Achse 17 ist der Radius 14 gekennzeichnet.

Hier ist nun im Längsschnitt veranschaulicht, wie die Position der einzelnen Verbindungsstellen 6 mit Bezug auf die Achse 17, die Stirnseiten 18 und/oder die Erstreckung 22 ist. Hier ist im Bereich der Stirnseite 18, auf die das Abgas mit der Strömungsrichtung 20 auftritt, angrenzend ein Verbindungsbereich ausgeführt, wobei die Verbindungsstellen 6 relativ kurz sind, beispielsweise kleiner 10 mm, oder sogar kleiner 5 mm. Auf der gegenüberliegenden Stirnseite 18 ist im Bereich einer ersten Zone 9, die konzentrisch um die Achse 17 ausgebildet ist, eine Mehrzahl von Verbindungsstellen 6 vorgegeben, die eine erste Länge aufweist. Um die erste Zone 9 herum ist eine zweite Zone 10 nach Art eines Kreisrings ausgebildet, in der die Verbindungsstellen 6 in einer größeren Länge ausgeführt sind, was hier durch die verlängerte Schraffur veranschaulicht ist. Es ist klarstellend darauf hinzuweisen, dass hier keine großflächigen Verbindungen realisiert sind, die Schraffur für die Verbindungsstellen 6 also rein schematisch ist. Grundsätzlich sind hier nur linienförmige Verbindungsstellen 6 bezüglich einer vorgegebenen Anzahl von Kontaktstellen der benachbarten metallischen Lagen 5 ausgebildet.

In Fig. 5 ist für gegebenenfalls ein Detail eines solchen Längsschnitts einer Wabenstruktur beispielhaft und schematisch die Länge und Position der Verbindungsstellen 6 dargestellt. Das Diagramm in Fig. 5 veranschaulicht auf der Abszisse die Achse 17 und mit der Ordinate den Radius 14. Die Verbindungsstellen 6 nahe der Achse 17 sind dabei mit einer kleineren Länge 13 ausgeführt, als die weitere von der Achse 17 entfernten Verbindungsstellen 6. Ebenfalls gekennzeichnet ist für jede Verbindungsstelle 6 ein Mittelpunkt 16. Es ist zu erkennen, dass die radial an verschiedenen Orten angeordneten Verbindungsstellen 6 Mittelpunkte 16 aufweisen, die auch in Richtung der Achse 17 zueinander versetzt sind.

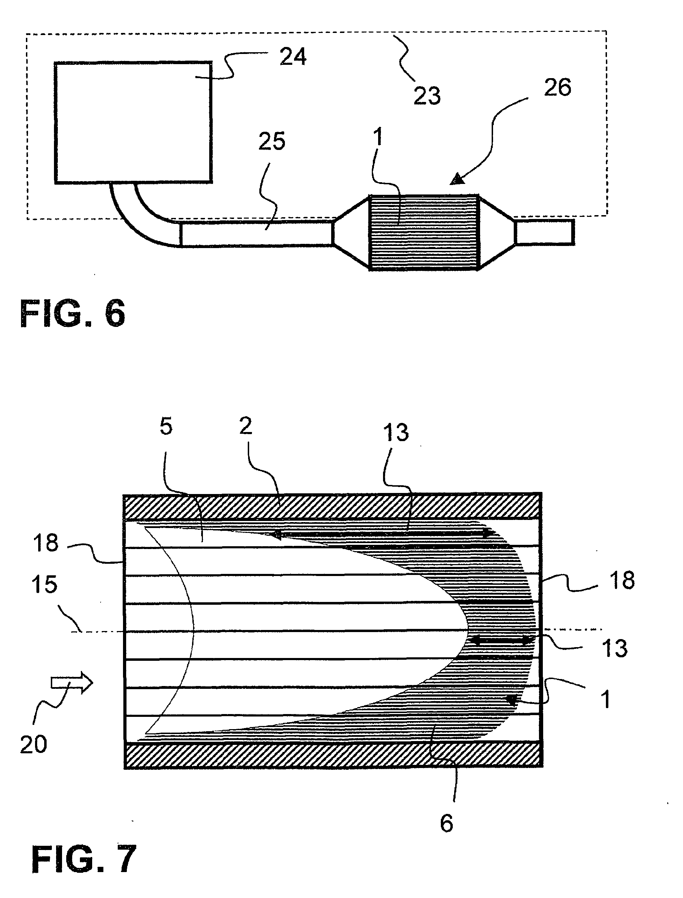

Fig. 6 veranschaulicht schematisch ein Kraftfahrzeug 23 mit einer Verbrennungskraftmaschine 24, beispielsweise einem Dieselmotor oder einem Ottomotor. Das in der Verbrennungskraftmaschine 24 erzeugte Abgas durchströmt eine Abgasanlage 25 hin zu wenigstens einer Abgasbehandlungseinheit 26, wobei diese hier mit dem erfindungsgemäßen Wabenkörper 1 gestaltet ist. Als Abgasbehandlungseinheit kommen insbesondere Katalysatoren, Adsorber, Filter, Partikelabscheider, Reformer, Heizer oder dergleichen in Betracht.

Fig. 7 zeigt eine weitere Ausführungsvariante eines Wabenkörpers 1 im Längsschnitt. Dabei sind nun die Verbindungsstellen 6 so ausgeführt, dass die nahe des Zentrums 15 der Wabenstruktur 1 positionierten Verbindungsstellen 6 mit einer kleineren Länge 13 ausgeführt sind als die, die nahe des Gehäuses 2 positioniert sind. Zudem sind die Verbindungsstellen 6 nahe des Zentrums 15 mit ihren Mittelpunkten näher zu der Stirnseite 18 positioniert, aus der das Abgas mit der Strömungsrichtung 20 austritt. Dies ist im radialen Randbereich anders, denn hier sind die Verbindungsstellen 6 eher mittig zwischen den beiden Stirnseiten 18 angeordnet.

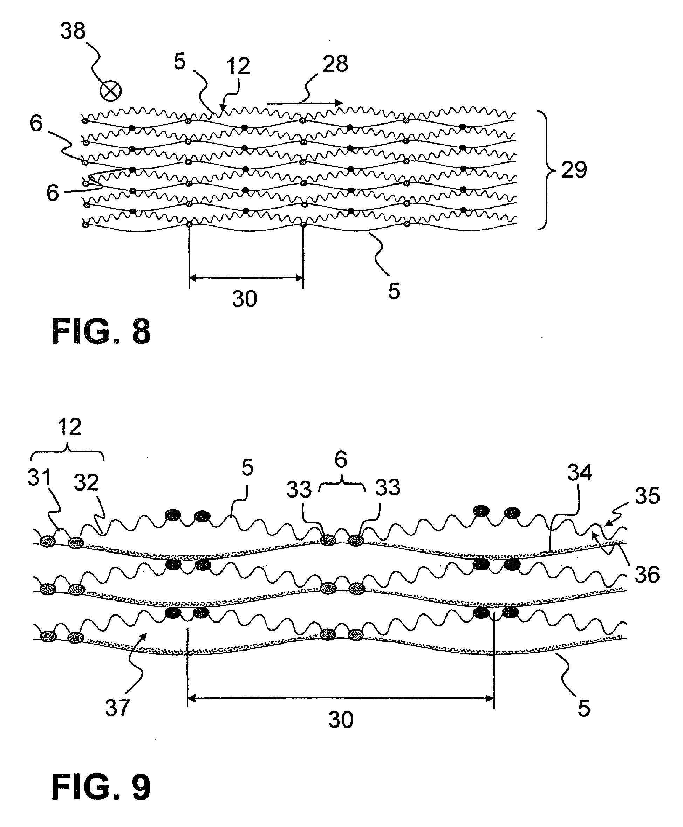

In Fig. 8 ist ein Stapel 29 mit einer Mehrzahl strukturierter und glatter metallischer Lagen 5 (z. B. nach Art von Blechfolien und/oder metallischen Feinstdrahtvliesen) gezeigt. Der Stapel 29 ist hierbei in einem noch ungewundenen Zustand dargestellt, hat also einen im Wesentlichen gradlinigen Lagenverlauf 28. Mit unterschiedlichen Farbgebungen sind zudem die Verbindungsstellen 6 der metallischen Lagen zueinander dargestellt. In Folge der Tatsache, dass die Ausbildung solcher Verbindungsstellen 6 (Lötverbindungen) erst im montierten Zustand, also im gewundenen Zustand im inneren des Gehäuses, ausgebildet werden, veranschaulicht die Fig. 8 insbesondere die Position für ein Haftmittel, an dem nach dem Wickelvorgang beispielsweise pulverförmiges Lot positioniert wird, welches letztendlich zur Ausbildung der hier exemplarisch und veranschaulichend dargestellten, bezogen auf die strukturierten metallischen Lagen 5 oberseitige Verbindungsstellung (hier dunkel markiert) und unterseitige Verbindungsstellen (hier hell markiert) dient. Zur Positionierung des Haftmittels und/oder des Lots kann insbesondere ein Druckverfahren eingesetzt werden, beispielsweise nach Art des Ink-Jet-Verfahrens.

Unten in Fig. 8 ist gezeigt, dass die gleichartigen, unterseitigen Verbindungsstellen 6, hier also hin zur unteren glatten Lage 5, eine vorgegebene Distanz 30 bilden, die beispielsweise in Richtung des Lagenverlaufs 28 mindestens 20 mm und/oder eine Vielzahl der Strukturextrema (Wellenberge und Wellentäler, beispielsweise mindestens 20 Wellenberge) umfasst. Auch wenn hier eine regelmäßige Anordnung der Verbindungsstellen 6 gezeigt ist, so ist dies nicht zwingend erforderlich. Üblicher Weise liegt die Struktur 12 einer gewellten metallischen Lage 5 an der glatten metallischen Lage 5 jeweils an, so dass die Struktur 12 an der glatten Lage 5 in Strukturverlaufsrichtung 38, also senkrecht zum Lagenverlauf 28, Kontaktlinien bzw. Berührpunkte ausbildet. Die Darstellung in Fig. 8 soll zeigen, dass bei einer Krafteinwirkung auf die metallischen Lagen 5 senkrecht zum Lagenverlauf 28 im späteren Betrieb Dehnungsfugen 37 gebildet werden können, die damit eine deutlich flexiblere Wabenstruktur und eine bessere Anpassung an das thermische und dynamische Belastungsverhalten der Wabenstruktur ermöglicht.

Fig. 9 zeigt nun eine Variante, wobei jede Verbindungsstelle 6 mit zwei Lötpunkten 33 an benachbarten Strukturextrema (Erhebungen 31 oder Senken 32) ausgebildet ist. Zwischen den Verbindungsstellen 6 ist eine Vielzahl von Strukturextrema der strukturierten metallischen Lage 5 vorgesehen. Es sei an dieser Stelle darauf hingewiesen, dass üblicher Weise die Anzahl der Strukturextrema zwischen den gleichartigen (gleichfarbig dargestellten) Verbindungsstellen 6 in Richtung des Lagenverlaufs 28 normalerweise deutlich höher ist als das hier exemplarisch dargestellt ist, beispielsweise liegen mindestens fünfzehn (15) Strukturextrema dazwischen.

Darüber hinaus lässt sich aus Fig. 9 erkennen, dass die glatten metallischen Lagen 5 mit einer Beschichtung 34 versehen sein kann, die insbesondere (unerwünschte) Diffusionsanbindung der benachbarten, im Einsatz aneinander regelmäßig anliegenden, metallischen Lagen 5 verhindert. Auch wenn diese bevorzugt an einer Oberseite 35 und einer Unterseite 36 der glatten und/oder gewellten metallischen Lage 5 vorgesehen ist, kann in Ausnahmesituationen auch eine einseitige Bereitstellung z. B. einer Oxidschicht genügen. Jedenfalls soll so gewährleistet werden, dass eine Anbindung der metallischen Lagen, beispielsweise in Folge einer Diffusion, vermieden wird und sich folglich unter Beanspruchung relativ große Dehnungsfugen 37 ausbilden können. Mit anderen Worten kann also als Bildungsgesetz festgehalten werden, dass eine solche Dehnungsfuge 37 beispielsweise mit einem Abschnitt einer glatten metallischen Lage 5 und einem Abschnitt einer strukturierten metallischen Lage 5 gebildet ist, wobei die Dehnungsfuge 37 durch zwei gleichartige Verbindungsstellen (hier für unterseitige Verbindungsstellen gezeigt) begrenzt ist, und weiter die Dehnungsfugenbegrenzung mittels der strukturierten metallischen Lage 5 mit mindestens fünfzehn (15) Strukturextrema gebildet ist. Damit wird eine besonders starke Verformbarkeit der Dehnungsfuge 37 bzw. eine flexible Anordnung der benachbarten Blechfolien realisiert, und zwar einerseits in Richtung des Lagenverlaufs 28 als auch quer dazu. Die Anzahl der Lötpunkte pro Verbindungsstelle 6 ist auf maximal drei begrenzt, insbesondere sogar auf zwei und besonders bevorzugt ist die Ausgestaltung einer Verbindungsstelle 6 mit nur genau einem Lötpunkt.

### Bezugszeichenliste

- 1: Wabenkörper
- 2: Gehäuse
- 3: Wabenstruktur
- 4: Kanal
- 5: Lage
- 6: Verbindungsstelle
- 7: Kontaktpunkt
- 8: Querschnitt
- 9: erste Zone
- 10: zweite Zone
- 11: dritte Zone
- 12: Struktur
- 13: Länge
- 14: Radius
- 15: Zentrum
- 16: Mittelpunkt
- 17: Achse
- 18: Stirnseite
- 19: Längenverlauf
- 20: Strömungsrichtung
- 21: Kanalerstreckungsrichtung
- 22: Erstreckung
- 23: Kraftfahrzeug
- 24: Verbrennungskraftmaschine
- 25: Abgasanlage
- 26: Abgasbehandlungseinheit
- 27: flexibler Bereich
- 28: Lagenverlauf
- 29: Stapel
- 30: Distanz
- 31: Erhebung
- 32: Senke
- 33: Lötpunkt
- 34: Beschichtung
- 35: Oberseite
- 36: Unterseite
- 37: Dehnungsfuge
- 38: Strukturverlaufrichtung

## Patentansprüche

1. Wabenkörper (1) zumindest aufweisend ein Gehäuse (2) und eine Wabenstruktur (3) mit einer Vielzahl von Kanälen (4), wobei die Wabenstruktur (3) mit zumindest einer wenigstens teilweise strukturierten metallischen Lage (5) gebildet ist, die die Wabenstruktur (3) fixierende Verbindungsstellen (6) bildet und ein gesamter Querschnitt (8) der Wabenstruktur (3) radiale Zonen (9, 10, 11) mit Verbindungsstellen (6) aufweist, **dadurch gekennzeichnet, dass**
- in allen Zonen (9, 10, 11) eine Vielzahl von inneren Kontaktpunkten der mindestens einen metallischen Lage gebildet ist, wobei zudem mindestens 1% und höchstens 20 % innerer Kontaktpunkte (7) der zumindest einen wenigstens teilweise strukturierten metallischen Lage (5) in jeder dieser Zone und betrachtet in dem gesamten Querschnitt (8) eine Verbindungsstelle (6) bilden, und
- die Verbindungsstellen (6) sich entlang der inneren Kontaktpunkte (7) erstrecken und eine Länge (13) in Richtung einer Struktur (12) der metallischen Lage (5) aufweisen, wobei die Länge (13) der Verbindungsstellen (6) in wenigstens zwei radialen Zonen (9, 10, 11) voneinander verschieden ist.

2. Wabenkörper (1) nach Patentanspruch 1, bei dem die Länge (13) der Verbindungsstellen (6) in einer radialen Zone kleiner ist als in einer in Richtung eines Radius (14) der Wabenstruktur (3) weiter außen liegenden radialen Zone.

3. Wabenkörper (1) nach Patentanspruch 1 oder 2, bei dem die Länge (13) der Verbindungsstellen (6) in einem Zentrum (15) der Wabenstruktur (3) am kleinsten und in einer äußeren radiale Zone am größten ist.

4. Wabenkörper (1) nach einem der vorhergehenden Patentansprüche, bei dem die Verbindungsstellen (6) in wenigstens einer radiale Zone mit einer gegenüber den Verbindungsstellen (6) beider benachbarter Zonen verringerten Länge (13) ausgeführt sind.

5. Wabenkörper (1) nach einem der vorhergehenden Patentansprüche, bei dem die Verbindungsstellen (6) jeweils einen Mittelpunkt (16) aufweisen, wobei die Mittelpunkte (16) der Verbindungsstellen (6) einer radialen Zone gegenüber Mittelpunkten (16) der Verbindungsstellen (6) einer anderen radialen Zone in Richtung der Struktur (12) versetzt sind.

6. Wabenkörper (1) nach Patentanspruch 5, bei dem eine Wabenstruktur (3) eine zentrale Achse (17) und Stirnseiten (18) aufweist, wobei die Mittelpunkte (16) der Verbindungsstellen (6) einer radialen Zone (9) nahe der Achse (17) näher an einer Stirnseiten (18) angeordnet sind als die Mittelpunkte (16) der Verbindungsstellen (6) in wenigstens einer weiter von der Achse (17) entfernten radialen Zone.

7. Wabenkörper (1) nach einem der vorhergehenden Patentansprüche, bei dem die Zonen so gewählt sind, dass sie mehrere metallische Lagen kreuzen, insbesondere sich über mindestens fünf metallische Lagen hinweg erstrecken.

## Claims

1. A honeycomb body (1) at least having a housing (2) and a honeycomb structure (3) comprising a multiplicity of channels (4), with the honeycomb structure (3) being formed with at least one at least partially structured metallic layer (5) which forms connecting points (6) for fixing the honeycomb structure (3), and with a complete cross section (8) of the honeycomb structure (3) having radial zones (9, 10, 11) with connecting points (6), **characterized in that**
- in all zones (9, 10, 11) a plurality of inner contact points of the at least one metallic layer (5) are formed, wherein further at least 1% and at most 20% of inner contact points (7) of the at least one at least partially structured metallic layer (5) form a connecting point (6) in each of these zones with the complete cross section (8) being considered, and
- the connecting points (6) extend along the inner contact points (7) and have a length (13) in the direction of a structure (12) of the metallic layer (5), with the lengths (13) of the connecting points (6) in at least two radial zones (9, 10, 11) differing from one another.

2. The honeycomb body (1) according to claim 1, in which the length (13) of the connecting points (6) in one radial zone is smaller than in a radial zone situated further outward in the direction of a radius (14) of the honeycomb structure (3).

3. The honeycomb body (1) according to claim 1 or 2, in which the length (13) of the connecting points (6) is smallest in a center (15) of the honeycomb structure (3) and is largest in an outer radial zone.

4. The honeycomb body (1) according to one of the preceding claims, in which the connecting points (6) in at least one radial zone are formed with a reduced length (13) in relation to the connecting points (6) of the two adjacent zones.

5. The honeycomb body (1) according to one of the preceding claims, in which the connecting points (6) each have a central point (16), wherein the central points (16) of the connecting points (6) of one radial zone are offset in the direction of the structure (12) in relation to central points (16) of the connecting points (6) of another radial zone.

6. The honeycomb body (1) according to claim 5, in which a honeycomb structure (3) has a central axis (17) and end sides (18), wherein the central points (16) of the connecting points (6) of a radial zone (9) close to the axis (17) are arranged closer to an end side (18) than the central points (16) of the connecting points (6) in at least one zone radially further remote from the axis (17).

7. The honeycomb body (1) according to one of the preceding claims, in which the zones are selected such that they cross a plurality of metallic layers, in particular that they extend over at least five metallic layers.

## Revendications

1. Corps en nid d'abeilles (1) présentant au moins un boîtier (2) et une structure en nid d'abeilles (3) avec une pluralité de canaux (4), la structure en nid d'abeilles (3) étant formée avec au moins une couche métallique (5) au moins partiellement structurée, qui forme des points de liaison (6) fixant la structure en nid d'abeilles (3) et une section transversale complète (8) de la structure en nid d'abeilles (3) présentant des zones radiales (9, 10, 11) avec des points de liaison (6), **caractérisé en ce que**
- dans toutes les zones (9, 10, 11) est formée une pluralité de points de contact internes de l'au moins une couche métallique, en outre au moins 1 % et au plus 20 % de points de contact internes (7) de l'au moins une couche métallique (5) au moins partiellement structurée formant, dans chacune de ces zones et considéré dans la section transversale complète (8), un point de liaison (6) et
- les points de liaison (6) s'étendant le long des points de contact internes (7) et présentant une longueur (13) dans la direction d'une structure (12) de la couche métallique (5), les longueurs (13) des points de liaison (6) dans au moins deux zones radiales (9, 10, 11) étant différentes les unes des autres.

2. Corps en nid d'abeilles (1) selon la revendication 1, dans lequel la longueur (13) des points de liaison (6) dans une zone radiale est inférieure à la longueur dans une zone radiale située plus à l'extérieur dans la direction d'un rayon (14) de la structure en nid d'abeilles (3).

3. Corps en nid d'abeilles (1) selon la revendication 1 ou 2, dans lequel la longueur (13) des points de liaison (6) est la plus petite dans un centre (15) de la structure en nid d'abeilles (3) et est la plus grande dans une zone radiale extérieure.

4. Corps en nid d'abeilles (1) selon l'une quelconque des revendications précédentes, dans lequel les points de liaison (6) sont réalisés dans au moins une zone radiale avec une longueur (13) réduite par rapport aux points de liaison (6) des deux zones adjacentes.

5. Corps en nid d'abeilles (1) selon l'une quelconque des revendications précédentes, dans lequel les points de liaison (6) présentent à chaque fois un centre (16), les centres (16) des points de liaison (6) d'une zone radiale étant décalés par rapport aux centres (16) des points de liaison (6) d'une autre zone radiale dans la direction de la structure (12).

6. Corps en nid d'abeilles (1) selon la revendication 5, une structure en nid d'abeilles (3) présente un axe central (17) et des côtés frontaux (18), les centres (16) des points de liaison (6) d'une zone radiale (9) à proximité de l'axe (17) étant disposés plus près de l'un des côtés frontaux (18) que les centres (16) des points de liaison (6) dans au moins une zone radiale plus éloignée de l'axe (17).

7. Corps en nid d'abeilles (1) selon l'une quelconque des revendications précédentes, dans lequel les zones sont choisies de telle sorte qu'elles croisent plusieurs couches métalliques, notamment qu'elles s'étendent sur au moins cinq couches métallique.
